# DEMANDE DE BREVET EUROPEEN

(11) **EP 2 033 733 A1**
(43) Date de publication de la demande: **11.03.2009**
(21) Numéro de dépôt: 08162394.4
(22) Date de dépôt: 14.08.2008
(51) Int. Cl.: B23P 19/06, B25H 1/00

(54) **Dispositif de vissage d'éléments de fixation disposés au-dessous d'une structure**

(30) Priorité: 10.09.2007 FR 0757452
(71) Demandeur: Peugeot Citroën Automobiles SA, 78943 Vélizy-Villacoublay Cedex (FR)
(72) Inventeur: Bigault, Michaël, 89260 Thorigny sur Oreuxe (FR)
(74) Mandataire: Allain, Laurent

(57) **Abrégé**

L'invention concerne un dispositif de vissage (1) d'éléments de fixation disposés au-dessous d'une structure, du type comprenant une tête de vissage (20) par le dessous de ces éléments de fixation, reliée à des moyens (15) d'entraînement en rotation et portée par un système à pantographe (10) d'assistance au déplacement dans l'espace de la tête de vissage (20). Cette tête de vissage (20) est déplaçable par des moyens (30) d'inclinaison entre une position sensiblement verticale et au moins une position inclinée.

## Description

La présente invention concerne un dispositif de vissage d'éléments de fixation disposés au-dessous d'une structure, comme par exemple des éléments de fixation d'un véhicule automobile disposés au-dessous de la caisse.

Dans de nombreux domaines industriels et notamment dans le domaine de la fabrication des véhicules automobiles sur des chaînes d'assemblage, il est nécessaire d'effectuer des opérations de vissage d'éléments de fixation disposés au-dessous de la caisse des véhicules automobiles. C'est le cas notamment des réservoirs de carburant qui sont fixés sous la caisse par plusieurs éléments de fixation, comme par exemple des vis.

Afin de faciliter ces opérations et rendre le travail moins pénible à un opérateur, celui-ci dispose d'un système de vissage comprenant une tête de vissage reliée à des moyens d'entraînement en rotation et portée par un système à pantographe d'assistance au déplacement dans l'espace de cette tête de vissage.

Généralement, dans les dispositifs existant, la tête de vissage est verticale permettant, de ce fait, de visser uniquement des éléments de fixation verticaux.

Or, il s'avère que pour certaines pièces à fixer, des éléments de fixation sont verticaux alors que d'autres sont inclinés ce qui oblige l'opérateur à interrompre la fixation de la pièce et à monter sur la tête de vissage un adaptateur particulier permettant de rattraper l'inclinaison des éléments de fixation inclinés.

L'invention a pour but d'éviter ces inconvénients en proposant un dispositif de vissage pour des éléments de fixation verticaux ou inclinés tenant compte de la diversité des pièces à fixer et permettant un mouvement naturel pour l'opérateur.

L'invention a donc pour objet un dispositif de vissage d'éléments de fixation disposés au-dessous d'une structure, du type comprenant une tête de vissage par le dessous de ces éléments de fixation, reliée à des moyens d'entraînement et portée par un système à pantographe d'assistance au déplacement dans l'espace de ladite tête de vissage, caractérisé en ce que la tête de vissage est déplaçable par des moyens d'inclinaison entre une position sensiblement verticale et au moins une position inclinée.

Selon d'autres caractéristiques de l'invention :
- les moyens d'inclinaison comprennent une plaque fixée à l'extrémité libre du système à pantographe et un moyeu d'axe sensiblement horizontal solidaire de ladite plaque et un support portant la tête de vissage monté libre en rotation sur ledit moyeu ;
- les moyens d'inclinaison comprennent un organe d'indexage du support de la tête de vissage dans chacune desdites positions ;
- l'organe d'indexage est formé par un pion porté par le support et déplaçable entre une position active et une position escamotée, ledit pion étant destiné à coopérer dans la position active avec un orifice ménagé dans la plaque pour chacune desdites positions ;
- le support comporte une butée de limitation du pivotement de la tête de vissage dans chacune desdites positions ; et
- le support comporte une poignée de commande du pivotement de la tête de vissage entre lesdites positions.

Les caractéristiques et avantages de l'invention apparaîtront au cours de la description qui va suivre donnée à titre d'exemple et faite en référence aux dessins annexés, sur lesquels :
- la figure 1 est une vue schématique en élévation d'un dispositif de vissage, conforme à l'invention,
- les figures 2 et 3 sont des vues schématiques, respectivement de face et de côté des moyens d'inclinaisons de la tête de vissage du dispositif de vissage, conforme à l'invention, et
- les figures 4 et 5 sont des vues schématiques en perspective de la tête de vissage respectivement en position verticale et en position inclinée.

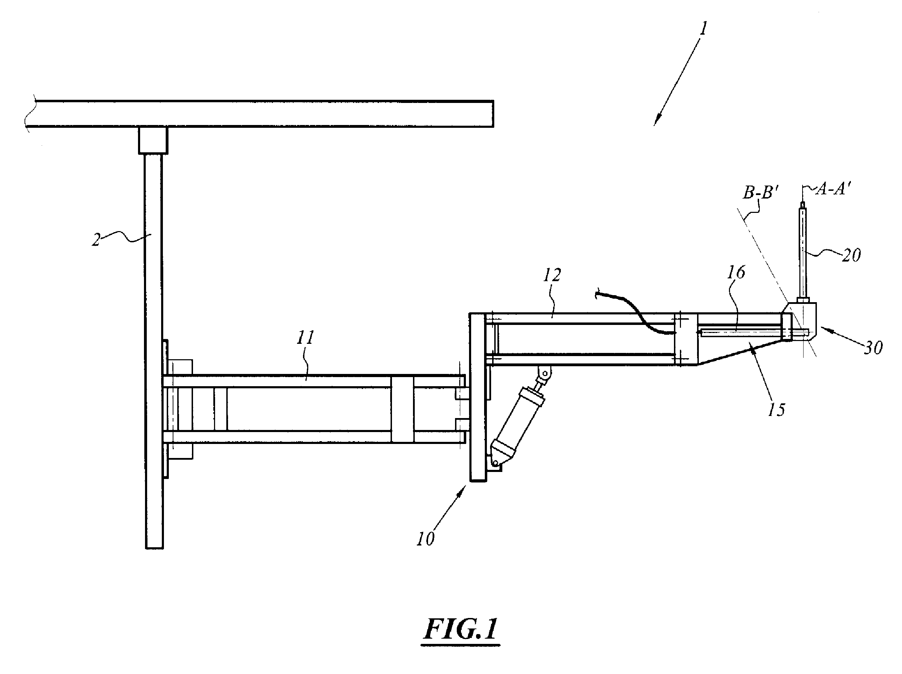

Sur la figure 1, on a représenté schématiquement un dispositif de vissage désigné dans son ensemble par la référence 1. Ce dispositif 1 est destiné au vissage d'éléments de fixation, non représentés, verticaux ou inclinés, et disposés au-dessous d'une structure. Les éléments de fixation sont constitués par des vis ou des boulons ou tout autre organe approprié.

Le dispositif de vissage 1 se compose d'un système à pantographe désigné dans son ensemble par la référence 10, fixé sur le bâti 2. Ce système à pantographe 10, de type connu, comprend un premier bras 11 fixé sur un bâti 2 et un second bras 12, fixé à l'extrémité libre du premier bras 11. L'extrémité du second bras 12 porte une tête de vissage 20 et les bras 11 et 12 sont articulés entre eux de façon à assister le déplacement dans l'espace de ladite tête de vissage 20.

La tête de vissage 20 est entraînée en rotation par des moyens d'entraînement 15, de type connu et classique, par exemple par un arbre 16 et un système à cardans, non représenté.

La tête de vissage 20 est déplaçable par des moyens d'inclinaison 30 entre un position sensiblement verticale d'axe AA' et au moins une position inclinée d'axe BB', comme montré à la figure 1.

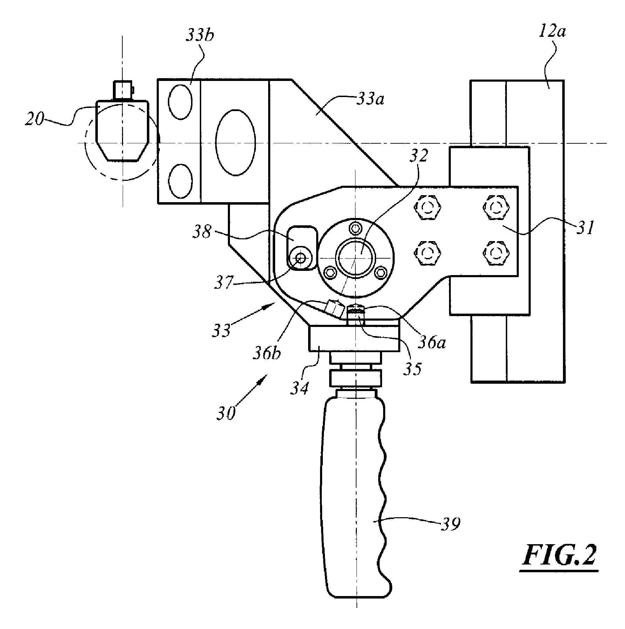

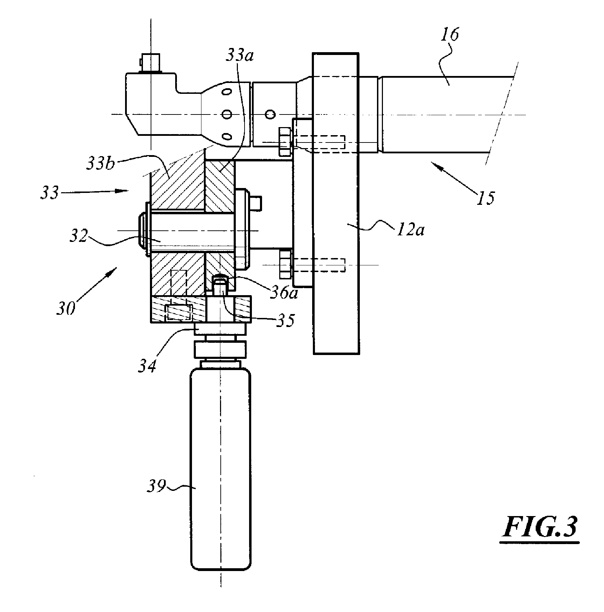

En se reportant maintenant aux figures 2 et 3, on va décrire les moyens d'inclinaison 30 de la tête de vissage 20.

Sur ces figures, l'extrémité du second bras 12 du système à pantographe 10 est désignée par la référence 12a.

Les moyens d'inclinaison 30 comprennent une plaque 31 fixée par des organes appropriés sur l'extrémité libre 12a du bras 12 du système à pantographe 10 et un moyeu 32 d'axe sensiblement horizontal et solidaire de ladite plaque 31. Un support 33 portant la tête de vissage 20 est monté libre en rotation sur le moyeu 32.

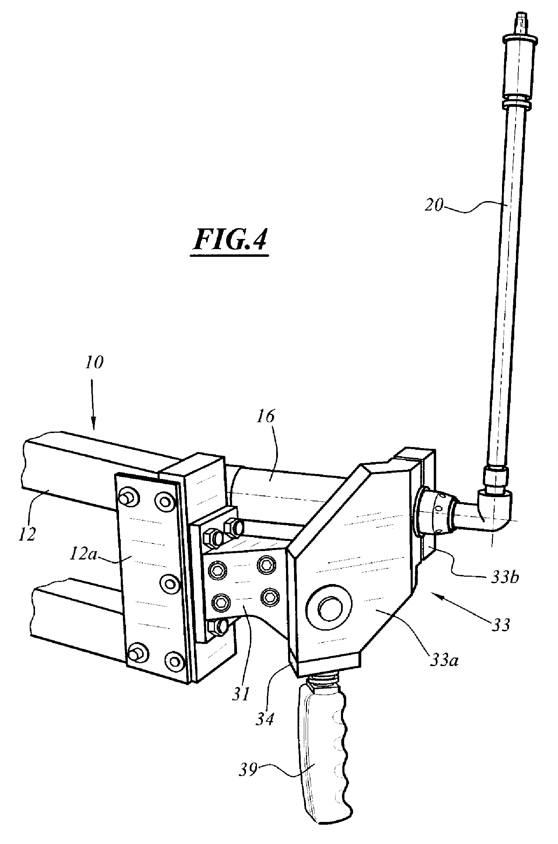

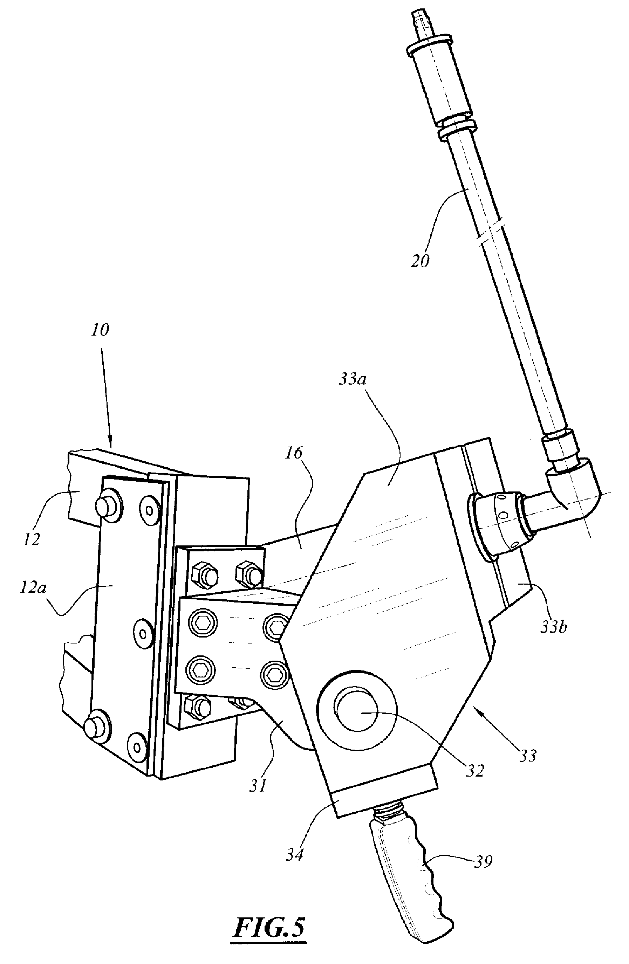

Ainsi que montré plus particulièrement sur les figures 4 et 5, le support 33 présente la forme générale d'une équerre comportant une première face 33a montée sur le moyeu 32 et une seconde face 33b supportant la tête de vissage 20. La première face 33a est munie, à sa partie inférieure, d'une patte 34 sensiblement horizontale et s'étendant au dessous de la plaque 31.

Les moyens d'inclinaison 30 comprennent également un organe indexable 35 du support 33 de la tête de vissage 20 dans chacune desdites positions. Cet organe d'indexage représenté sur les figures 2 et 3 est formé par un pion 35 porté par la patte 34 du support 33 et déplaçable par un élément élastique, non représenté, entre une position active et une position escamotée. Ce pion 35 coopère avec un premier orifice 36a ménagé dans la plaque 31 et qui correspond à la position verticale de la tête de vissage 20 et avec un second orifice 36b ménagé dans la plaque 31 et qui correspond à la position inclinée de cette tête de vissage 20. En plus de l'orifice 36a correspondant à la position verticale de la tête de vissage 20, la plaque 31 peut comporter plusieurs orifices 36b correspondant chacun à une position inclinée de ladite tête de vissage 20.

Le support 33 comporte aussi une butée 37 de limitation du pivotement de la tête de vissage 20 dans chacune des positions de cette tête de vissage 20. La butée 37 est formée par un pion déplaçable lors du pivotement de la tête de vissage 20 dans une lumière 38 ménagée dans la plaque 31, ainsi que montré à la figure 2. Le bord inférieur de la lumière 38 correspond à la position verticale de la tête de vissage 20 et le bord supérieur de cette lumière 38 correspond à une position inclinée de ladite tête de vissage 20.

Enfin, la patte 34 du support 33 comporte une poignée 39 permettant de faire pivoter le support 33 autour du moyeu 32 et de déplacer la tête de vissage 20 entre la position verticale d'axe AA' et une position inclinée d'axe BB'.

En effet, et comme montré sur les figures 4 et 5, un opérateur pour visser un élément de fixation à axe vertical déplace la tête de vissage 20 supportée par le système à pantographe 10 pour engager l'extrémité de ladite tête de vissage 20 sur l'élément de fixation. Ensuite, il commande la rotation de cette tête de vissage 20 pour visser les éléments de fixation à axe vertical. Dans cette position, le pion 35 est en saillie dans l'orifice 36a de façon à maintenir la tête de vissage 20 dans la position verticale et la butée 37 est en appui contre le bord inférieur de la lumière 38. La tête de vissage 20 est donc maintenue dans une position sensiblement verticale.

Dans le cas d'un élément de fixation à axe incliné, l'opérateur saisie la poignée 39 et fait pivoter le support 33 dans la tête de vissage 20. Au cours de ce mouvement, le pion 35 se rétracte et dès qu'il arrive en regard de l'orifice 36b, il pénètre dans cet orifice 36b de façon à maintenir le support 33 et la tête de vissage 20 en position inclinée. Dans cette position le pion 37 est en appui contre le bord supérieur de la lumière 38.

La tête de vissage 20 est ainsi inclinée selon un axe qui correspond à l'axe d'inclinaison de l'élément de fixation qu'il doit visser.

Ensuite, l'opérateur peut ramener la tête de vissage 20 en position sensiblement verticale.

Le dispositif de vissage selon l'invention permet un mouvement naturel de l'opérateur et tient compte de la diversité des pièces à monter.

Le dispositif de vissage selon l'invention est simple à mettre en oeuvre et fiable, peu onéreux et permet un gain de temps important du fait qu'il évite toute opération d'adaptation d'un élément complémentaire sur la tête de vissage lors du serrage d'éléments de fixation inclinés.

## Revendications

1. Dispositif de vissage d'éléments de fixation disposés au-dessous d'une structure, du type comprenant une tête de vissage (20) par le dessous de ces éléments de fixation, reliée à des moyens (15) d'entraînement en rotation et portée par un système à pantographe (10) d'assistance au déplacement dans l'espace de ladite tête de vissage (20), **caractérisé en ce que** la tête de vissage (20) est déplaçable par des moyens (30) d'inclinaison entre une position sensiblement verticale et au moins une position inclinée.

2. Dispositif de serrage selon la revendication 1, **caractérisé en ce que** les moyens (30) d'inclinaison comprennent une plaque (31) fixée à l'extrémité libre (12a) du système à pantographe (10) et un moyeu (32) d'axe sensiblement horizontal solidaire de ladite plaque (31) et un support (33) portant ladite tête de vissage (20) monté libre en rotation sur ledit moyeu (32).

3. Dispositif de vissage selon la revendication 1 ou 2, **caractérisé en ce que** les moyens (30) d'inclinaison comprennent un organe d'indexage (35) du support (33) de la tête de serrage (20) dans chacune desdites positions.

4. Dispositif de vissage selon la revendication 3, **caractérisé en ce que** l'organe d'indexage est formé par un pion (35) porté par le support (33) et déplaçable entre une position active et une position escamotée, ledit pion (35) étant destiné à coopérer dans la position active avec un orifice (36a, 36b) ménagé dans la plaque (31) pour chacune desdites positions.

5. Dispositif de vissage selon l'une quelconque des revendications 2 à 4, **caractérisé en ce que** le support (33) comporte une butée (37) de limitation du pivotement de la tête de vissage (20) dans chacune desdites positions.

6. Dispositif de vissage selon l'une quelconque des revendications 2 à 5, **caractérisé en ce que** le support (33) comporte une poignée (39) de commande de pivotement de la tête de vissage (20) entre lesdites positions.
